# DEMANDE DE BREVET EUROPEEN

(11) **EP 2 256 375 A1**
(43) Date de publication de la demande: **01.12.2010**
(21) Numéro de dépôt: 10163785.8
(22) Date de dépôt: 25.05.2010
(51) Int. Cl.: F16H 61/12, F16H 61/28

(54) **Procède de protection du dispositif de synchronisation d'une boite de vitesses pilotée d'un véhicule automobile**

(30) Priorité: 27.05.2009 FR 0953478
(71) Demandeur: Peugeot Citroën Automobiles SA, 78140 Vélizy-Villacoublay (FR)
(72) Inventeur: Siegfried, Adrien, 92250, La Garenne Colombes (FR); Gallier, Jean-Yves, 78420, Carrieres sur Seine (FR)

(57) **Abrégé**

L'invention concerne un procédé de protection d'une boîte de vitesses pilotée d'un véhicule automobile.

Ce procédé est **caractérisé en ce que**, quand le paramètre mesuré n'est pas dans une gamme de valeurs de fonctionnement normal, l'unité de commande remplace la consigne maximale (Vmax) de vitesse ou d'effort par une consigne corrigée (Vinit) de vitesse ou d'effort inférieure à celle-ci.

Application dans le domaine des véhicules automobiles.

## Description

La présente invention concerne un procédé de protection d'une boîte de vitesses pilotée d'un véhicule automobile, notamment de son dispositif de synchronisation. Elle peut trouver une application préférentielle mais non limitative pour la protection de la boîte de vitesses lors de ses premiers changements de rapport durant la phase de rodage de celle-ci.

Une boîte de vitesses comprend généralement un arbre primaire lié en rotation à un arbre de sortie de moteur du véhicule par un embrayage et un arbre secondaire lié en rotation à un arbre de transmission aux roues motrices du véhicule.

L'arbre primaire porte plusieurs pignons primaires qui sont rigidement solidaires de celui-ci et l'arbre secondaire porte plusieurs pignons et plusieurs synchroniseurs.

Chaque pignon secondaire est en permanence engrené dans un pignon primaire correspondant, chaque pignon secondaire étant monté rotatif sur l'arbre secondaire tout en pouvant être solidarisé en rotation avec cet arbre secondaire par un synchroniseur qui lui est associé.

Chaque ensemble, formé d'un pignon primaire et d'un pignon secondaire engrenés l'un dans l'autre, correspond à un rapport de démultiplication de la boîte de vitesses.

Cette boîte de vitesses est au point mort lorsque aucun pignon secondaire n'est solidarisé à l'arbre secondaire et elle est en prise lorsqu'un des pignons secondaires est solidarisé en rotation à l'arbre secondaire, plusieurs pignons secondaires n'étant jamais solidarisés simultanément à l'arbre secondaire.

Lors d'un changement de rapport, le synchroniseur correspondant au rapport souhaité est engagé pour désaccoupler de l'arbre secondaire le pignon secondaire correspondant au rapport à désengager. Ensuite, le synchroniseur est engagé pour solidariser à l'arbre secondaire le pignon secondaire correspondant au nouveau rapport souhaité.

Ainsi, la synchronisation lors d'un changement de rapport permet d'engager un rapport de la boîte de vitesses sans choc ni craquement.

Cependant les paramètres d'un changement de rapport dans une boîte de vitesses, notamment les paramètres de la synchronisation, peuvent changer, par exemple à cause de l'usure ou de la nouveauté de certains de ses éléments, dans le temps d'utilisation de cette boîte, ce qui peut conduire à des changements de rapport de qualité insatisfaisante et même à la possible détérioration de cette boîte.

La présente invention va être ci-dessous décrite en prenant comme exemple le rodage d'une boîte de vitesses et les disfonctionnements pouvant apparaître lors de ce rodage. Cet exemple doit être pris dans un but illustratif et n'est pas limitatif de la présente invention qui s'applique à tout fonctionnement de la boîte de vitesses sortant des conditions préétablies de fonctionnement dit normal de celle-ci.

Il est apparu que le dispositif de synchronisation d'une boîte de vitesses pilotée pouvait s'endommager lors du test de roulage en sortie d'usine terminale de même que lors des tous premiers changements de rapport. Ce problème peut générer alors des craquements perceptibles par l'utilisateur du véhicule automobile, ce qui peut aller jusqu'à rendre même ledit véhicule impropre à la vente et nécessiter un changement de sa boîte de vitesses. Il se peut aussi que ces craquements surviennent ultérieurement dans la vie du véhicule, ce qui est ressenti par l'utilisateur comme un défaut majeur de qualité.

Il est actuellement difficile d'éviter une telle détérioration du dispositif de synchronisation d'une boîte de vitesses pilotée survenant lors des premiers instants de roulage.

Le document US-A-6 389 916 décrit une transmission automatique avec une unité de commande pour un dispositif de synchronisation permettant une réactualisation des paramètres de commande de changement de rapport en tenant compte d'une variation entre la valeur cible de position de passage et la valeur de position de passage effectivement rencontrée de même que le temps de passage correspondant, ceci permettant un changement de rapport dans un temps réduit même si les paramètres de passage changent avec le temps.

Ce document a trait à l'optimisation des changements de rapport dans une transmission et non à la protection de certains éléments de cette transmission, le problème de la détérioration de ces éléments n'ayant pas été évoqué dans ce document. En conséquence, ce document ne donne aucune indication concernant l'élaboration d'un procédé de protection d'une boîte de vitesses pilotée.

Le problème à la base de la présente invention est d'éviter l'endommagement d'une boîte de vitesses pilotée par la mise en oeuvre d'un procédé de protection d'un ou de plusieurs éléments de cette boîte, notamment de son dispositif de synchronisation, ce procédé pouvant être mis en oeuvre quand la boîte de vitesse travaille dans des conditions ne correspondant pas à son fonctionnement normal, notamment lors de la période de rodage du véhicule automobile.

A cet effet, l'invention a pour objet un procédé de protection d'une boîte de vitesses, cette boîte de vitesses présentant au moins un ensemble de transmission de couple entre un arbre primaire et un arbre secondaire avec un dispositif de synchronisation, ledit ensemble étant activé par un actionneur, une unité de commande pilotant cet actionneur par détermination d'une consigne maximale de vitesse ou d'effort permettant un changement de rapport rapide sans endommagement dudit ensemble, cette unité de commande mesurant et comparant au moins un paramètre de fonctionnement de cette boîte avec une gamme préalablement établie de valeurs de ce paramètre correspondant à un fonctionnement normal de la boîte de vitesses, **caractérisé en ce que,** quand le paramètre mesuré n'est pas dans ladite gamme, l'unité de commande remplace la consigne maximale de vitesse ou d'effort par une consigne corrigée de vitesse ou d'effort inférieure à celle-ci.

Selon des caractéristiques additionnelles de la présente invention :
- la consigne corrigée de vitesse ou d'effort est préalablement établie afin de ne pas provoquer de dégradation de l'ensemble de transmission, notamment du dispositif de synchronisation, lors de la période de rodage de la boîte de vitesses,
- le paramètre pris en compte par l'unité de commande est le nombre de changements de rapport déjà effectués lors du fonctionnement de la boîte de vitesses, la consigne maximale de vitesse ou d'effort étant remplacée par la consigne corrigée de vitesse ou d'effort tant que ce nombre de changements n'a pas atteint un premier nombre préalablement établi dans l'unité de commande,

- un second nombre de changements de rapport, inférieur au premier, est préalablement établi dans l'unité de commande, une consigne intermédiaire de vitesse ou d'effort étant appliquée à l'actionneur quand ce second nombre est atteint, cette consigne intermédiaire étant supérieure à la consigne corrigée de vitesse ou d'effort, ladite consigne intermédiaire croissant selon le nombre de changements de rapport effectués pour être égale à la consigne maximale de vitesse ou d'effort quand le premier nombre de changements de rapport est atteint,
- le premier nombre est de l'ordre d'une ou de plusieurs centaines de changements de rapport et, le cas échéant, le second nombre est de l'ordre d'une ou de plusieurs dizaines de changements de rapport,
- l'activation de l'ensemble de transmission comprend une étape d'approche du dispositif de synchronisation puis une phase d'armement dudit dispositif, une étape de synchronisation, et une étape de changement de rapport, la consigne maximale et la consigne corrigée de vitesse ou d'effort s'appliquant au moins en fin d'étape d'approche commençant avec l'atteinte d'un point d'armement et/ou lors de l'étape de synchronisation commençant avec l'atteinte d'un point de synchronisation, ces points étant déterminés par l'unité de commande, pour un changement de rapport donné, selon un ou des paramètres de la boîte de vitesses,
- la consigne corrigée de vitesse ou d'effort est déterminée en tenant compte, lors d'un changement de rapport donné, d'un intervalle de temps dans lequel le point d'armement et/ou le point de synchronisation est susceptible d'être atteint, cette consigne corrigée correspondant, dans l'intervalle de temps respectif à chacun de ces points, à une valeur inférieure respectivement à la consigne maximale de vitesse ou d'effort au point d'armement et/ou au point de synchronisation,
- au moins un desdits points est déterminé par l'unité de commande en fonction de la variation de régime de l'arbre primaire et/ou du déplacement accompli par l'actionneur et/ou de l'effort exercé sur l'actionneur lors de son déplacement.

L'invention concerne aussi une boîte de vitesses pilotée présentant une unité de commande, **caractérisée en ce que** son unité de commande intègre un tel procédé de protection ainsi qu'un véhicule automobile comportant une telle boîte de vitesses pilotée.

L'effet technique obtenu par un procédé de protection selon la présente invention, la mise en oeuvre de ce procédé revêtant un caractère temporaire, permet une protection efficace d'éléments d'un boîte de vitesses, notamment du dispositif de synchronisation de celle-ci, ceci lors d'une période d'utilisation pendant laquelle ils sont susceptibles d'être endommagés.

Ceci est particulièrement adapté pour une période de rodage du dispositif de synchronisation d'une telle boîte de vitesses.

La mise en oeuvre de ce procédé peut être aisément annulée une fois les conditions de fonctionnement de la boîte de vitesses redevenues normales, ce qui garantit à l'utilisateur du véhicule une bonne prestation, la boîte de vitesses retrouvant son pilotage optimal de fonctionnement normal quand ladite période d'utilisation posant problème est écoulée.

L'invention va maintenant être décrite plus en détail mais de façon non limitative en regard des figures annexées, dans lesquelles :

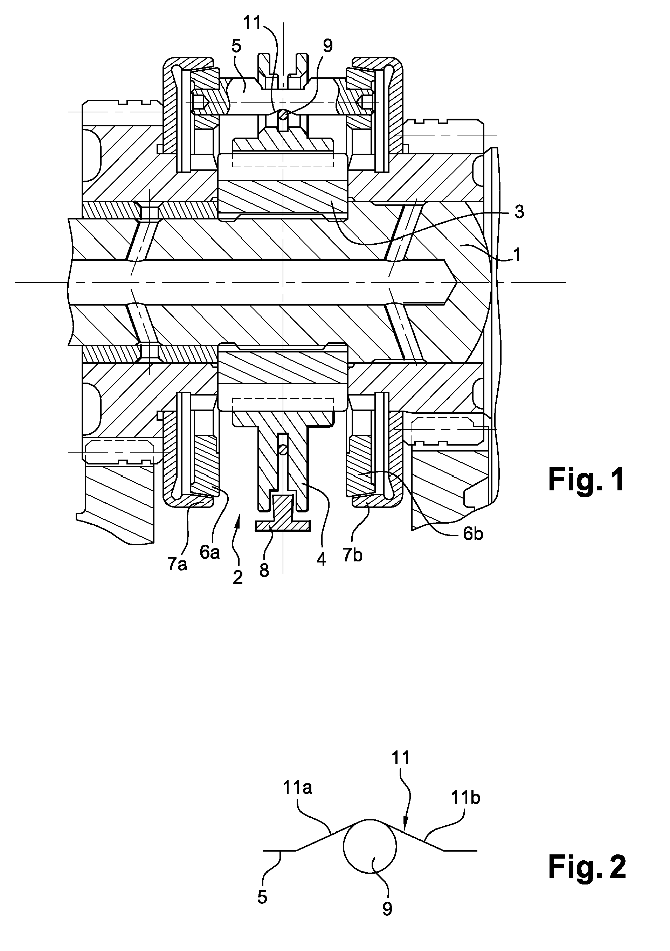

- la figure 1 est une représentation schématique d'une coupe longitudinale d'une partie de boîte de vitesses de la chaîne de traction d'un véhicule automobile, cette figure montrant notamment un dispositif de synchronisation pouvant être piloté selon un procédé de protection conforme à la présente invention,
- la figure 2 est une représentation schématique d'une vue agrandie d'une coupe longitudinale d'un barreau avec un profil en forme de V coopérant avec un jonc pour un dispositif de synchronisation pouvant être piloté selon un procédé de protection conforme à la présente invention,

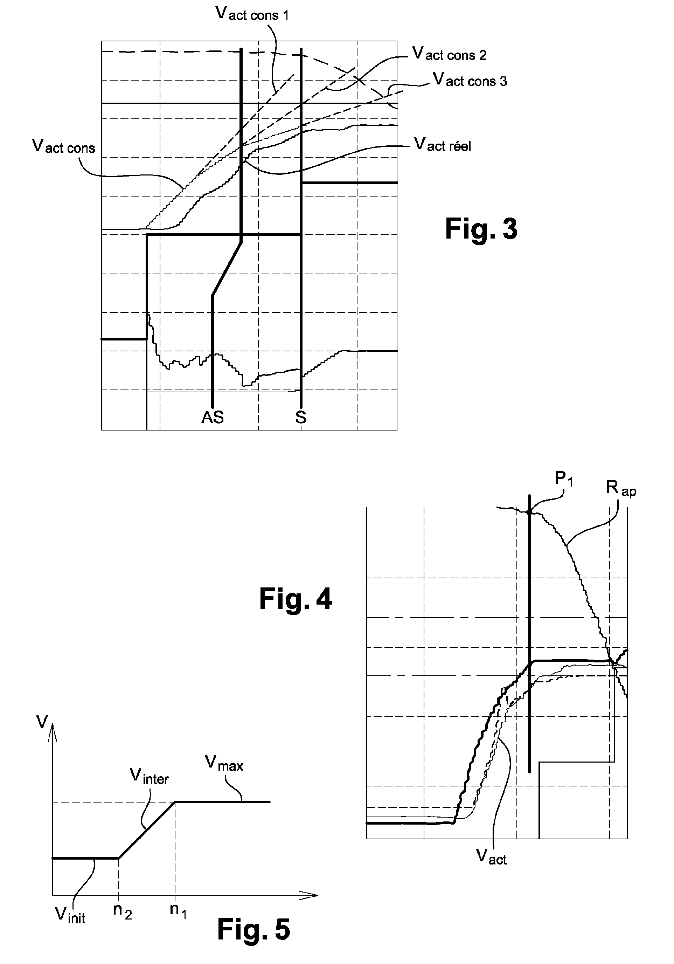

- la figure 3 montre une courbe de vitesse de consigne ainsi qu'une courbe de vitesse réelle d'un actionneur d'un dispositif de synchronisation de boîte de vitesses, cet actionneur pouvant être piloté temporairement selon un procédé de protection conforme à la présente invention, ces courbes illustrant la détermination de points de fin d'étape d'approche et d'étape de synchronisation,
- la figure 4 montre une courbe de vitesse de consigne ainsi qu'une courbe de vitesse réelle d'un actionneur d'un dispositif de synchronisation, cet actionneur pouvant être piloté selon un procédé de protection conforme à la présente invention, cette figure illustrant la détermination du point de synchronisation par détection du début de variation du régime de l'arbre primaire,
- la figure 5 montre une courbe de vitesse de consigne en fonction du nombre de changements de rapport, cette courbe de vitesse étant obtenue selon un procédé de protection conforme à la présente invention.

Dans ce qui va suivre, le pilotage de la boîte de vitesses selon le procédé de protection conforme à la présente invention se fait par l'intermédiaire d'une consigne de vitesse de l'actionneur mais ceci n'est pas obligatoire, un autre paramètre de l'actionneur pouvant être sélectionné.

Comme autres paramètres, pris unitairement ou en combinaison, on pourra citer des paramètres relevés lors de la synchronisation et représentatifs de celle-ci, comme par exemple le paramètre d'effort exercé sur ce dispositif de synchronisation, notamment sur son actionneur, avantageusement par la pression d'huile régnant dans celui-ci quand il est sous la forme d'un vérin à double effet. Il est possible d'utiliser des paramètres relatifs à l'architecture du dispositif de synchronisation et représentatifs de ses conditions de travail à un instant donné.

De même, l'exemple de fonctionnement dit anormal de la boîte de vitesses pris comme cas de figure pour la mise en oeuvre du procédé selon la présente invention est une période de rodage de cette boîte mais ledit procédé peut s'appliquer pour d'autres conditions de fonctionnement dit anormal de cette boîte de vitesses.

Ainsi, au lieu de prendre le nombre de changements de rapport déjà effectués comme paramètre pour déterminer ou non si la boîte de vitesses fonctionne dans des conditions normales, des paramètres relatifs à la résistance rencontrée par l'actionneur, quantifiés notamment par le paramètre d'effort exercé sur lui, des paramètres relatifs à l'huile de la boîte de vitesses, comme sa viscosité et/ou sa température, des paramètres relatifs à l'environnement de la boîte de vitesses, comme la température extérieure, peuvent être pris en considération unitairement ou en combinaison pour mettre en oeuvre ce procédé de protection de la boîte de vitesses en conditions anormales de fonctionnement.

La figure 1 montre les divers éléments d'un dispositif de synchronisation d'une boîte de vitesses pilotée. Le dispositif de synchronisation 2, illustré à cette figure est un dispositif à jonc et barreau, dénommé en anglais « new process » mais le procédé de l'invention peut s'appliquer à tous les types de dispositif de synchronisation.

A cette figure, la partie de la boîte de vitesses représentée comprend un arbre secondaire 1 ou arbre mené portant deux pignons secondaires séparés l'un de l'autre le long de cet arbre secondaire 1 par un dispositif de synchronisation 2 double.

Ce dispositif de synchronisation 2 double comprend un moyeu 3 solidaire de l'arbre secondaire 1 et un manchon mobile 4 apte à être déplacé le long de l'arbre secondaire 1 tout en étant lié en rotation au moyeu 3.

Le dispositif de synchronisation 2 comprend aussi un barreau 5 portant à chacune de ses deux extrémités tournées vers un pignon respectif porté par l'arbre secondaire 1 une bague de synchronisation 6a ou 6b. Ces bagues 6a et 6b assurent la synchronisation durant l'accouplement respectif du pignon secondaire associé en venant en appui sur une surface de frottement correspondante 7a ou 7b associée au pignon respectif porté par l'arbre secondaire 1.

Un jonc 9 d'armement, porté par le manchon 4, assure la liaison entre ce dernier et le barreau 5. Ceci sera mieux vu à la figure 2. A cette figure, il est apparent que le déplacement du jonc 9 va entraîner dans son mouvement le barreau 5, par l'intermédiaire de la pente de chacune des rampes 11a et 11b de la gorge 11 en forme de V ouvert vers le jonc 9 que présente ledit barreau 5.

De nouveau en référence à la figure 1, ce déplacement du barreau 5 s'effectue jusqu'à ce que la bague de synchronisation 6a ou 6b, portée par le barreau 5 et correspondante au pignon à synchroniser, soit plaquée en butée contre la surface de frottement correspondante 7a ou 7b en vis à vis. La mise en action du dispositif de synchronisation 2 est effectuée par un actionneur agissant sur le manchon 4 mobile. Cet actionneur n'est pas complètement représenté à la figure 1 avec seulement la présence d'un élément de liaison 8 entre manchon 4 et actionneur.

L'actionneur du dispositif de synchronisation 2 peut être un vérin à double effet apte à recevoir de l'huile sous pression circulant entre deux chambres de compression. Dans ce cas, le vérin à double effet est avantageusement équipé de deux capteurs de pression correspondant à chaque chambre et la différence de ces capteurs de pression est représentative de l'effort appliqué par l'actionneur sur le manchon 4 mobile.

Cet actionneur est avantageusement piloté par une unité de commande prévue dans la boîte de vitesses.

Avantageusement, la boîte de vitesses est aussi munie d'un capteur de position de l'actionneur et d'un capteur de vitesse de rotation de l'arbre primaire qui transmettent ces informations à son unité de commande.

Tous les différents capteurs sont donc avantageusement reliés à cette unité de commande, non représentée à la figure 1, cette unité de commande pilotant la boîte de vitesses en déplaçant l'actionneur lorsque le conducteur demande un changement de rapport.

L'engagement d'un rapport consiste à déplacer le manchon 4 selon une suite d'étapes qui se décompose en une étape d'approche, une phase d'armement, une étape de synchronisation, une étape de dévirage, une étape de vol libre et une étape de crabotage.

Sans que cela soit limitatif, la mise en oeuvre du procédé de protection s'effectue préférentiellement pendant les étapes d'approche, d'armement et de synchronisation et ces étapes vont être décrites plus amplement dans ce qui va suivre.

Durant l'étape d'approche et d'armement, le manchon 4 est déplacé axialement pour rapprocher la bague de synchronisation 6a ou 6b de la surface de frottement 7a ou 7b correspondante du pignon secondaire à craboter. Le jonc d'armement 9 agit comme un ressort, est plaqué sur le profil en forme de V de la gorge 11 du barreau 5, ce qui est montré à la figure 2. Ce jonc 9 transmet ainsi l'effort au barreau 5 lors du déplacement du manchon 4 et entraîne en translation la bague 6a ou 6b de synchronisation qui vient frotter contre la surface de frottement 7a ou 7b correspondante.

Cette étape d'approche et notamment sa phase d'armement permet l'essorage, en particulier en fonction de la géométrie spécifique des bagues 6a ou 6b, des surfaces de frottement 7a ou 7b, du film d'huile présent entre la surface de frottement 7a ou 7b du pignon à synchroniser et la bague 6a ou 6b de synchronisation.

Cette étape assure également l'indexage de la bague 6a ou 6b afin d'interdire l'engagement du rapport de vitesse tant que les vitesses du pignon et de l'arbre secondaire 1 ne sont pas égalisées.

La phase d'armement du dispositif de synchronisation 2 lui permet de bloquer le passage du manchon 4 en formant un mur avec la bague de synchronisation 6a ou 6b. L'établissement du mur formé par la bague de synchronisation 6a ou 6b est dépendant de l'effort d'armement appliqué par le ressort d'armement ou le jonc d'armement 9 et les paramètres de commande, entre autres, l'effort appliqué sur l'actionneur et la vitesse du manchon, ces deux paramètres constituant les paramètres préférés d'asservissement du mouvement de l'actionneur de la boîte de vitesses par son unité de commande.

Durant l'étape de synchronisation, se produit l'égalisation des vitesses différentielles entre le pignon et l'arbre 1, ceci sous l'effort de l'actionneur appliqué au manchon 4 directement sur les rampes du barreau 5. Le jonc 9 va ensuite se déplacer sur une rampe de la gorge 11 en V du barreau 5 en se comprimant, jusqu'à sortir de cette gorge 11.

Durant la phase de crabotage, le pignon secondaire tourne sensiblement à la même vitesse que l'arbre secondaire 1 de sorte que la bague 6a ou 6b n'est plus en frottement contre la surface de frottement 7a ou 7b correspondante. L'effort exercé par le manchon 4 sur la bague 6a ou 6b est suffisant pour la faire passer en position angulaire de libération et permettre ainsi au manchon 4 mobile de se déplacer axialement pour s'engager dans la denture de crabotage du pignon secondaire 2.

Si le manchon 4 se déplace trop vite, durant la phase d'armement il n'y a pas suffisamment de temps pour évacuer suffisamment l'huile entre la bague de synchronisation 6a ou 6b et le pignon fou.

Il y a alors un risque de craquement de la boîte de vitesses avec une possible destruction du dispositif de synchronisation 2, particulièrement de son manchon 4, et du pignon correspondant.

La figure 3 montre l'étape d'approche et le début de l'étape de synchronisation d'un dispositif de synchronisation d'une boîte de vitesses pilotée en montrant les consignes de vitesse appliquées à l'actionneur de même que sa vitesse réelle pendant ces étapes.

De manière connue, une boîte de vitesses manuelle pilotée comprend une unité de commande centrale pouvant mémoriser plusieurs cas de figure déjà rencontrés ou introduits préalablement au fonctionnement de cette boîte. Cette unité de commande centrale comprend un calculateur et peut aussi recevoir de différents capteurs des paramètres représentatifs du fonctionnement à un instant donné de la boîte de vitesses. Ces capteurs peuvent être, par exemple un capteur du régime de rotation de l'arbre primaire, un capteur d'effort de l'actionneur, un capteur de vitesse de cet actionneur etc....

L'unité de commande de la boîte de vitesses peut déterminer précisément la position de l'actionneur afin d'indiquer au conducteur quelle vitesse est engagée. Un compteur du nombre de changements de rapport est aussi avantageusement intégré au calculateur de l'unité de commande.

Sur détection par l'unité de commande d'une demande d'engagement de rapport émise par le conducteur, cette unité pilote l'actionneur en commençant par l'étape d'approche. Durant cette étape d'approche, l'actionneur peut être piloté selon un asservissement en vitesse afin de se déplacer avec une consigne de vitesse prédéterminée.

A la figure 3, la courbe Vact réel indique la vitesse réelle de l'actionneur lors des étapes d'approche et de synchronisation. A cette figure, cette vitesse Vact réel est inférieure à une consigne de vitesse Vact cons.

La consigne de vitesse de l'actionneur, référencée Vact cons, peut être fixée à des valeurs différentes lors des différentes étapes de la synchronisation et lors des différentes phases d'une même étape.

La détermination de cette consigne de vitesse est faite par l'unité de commande selon des paramètres de la boîte de vitesses pris en contradiction, cette unité de commande effectuant un compromis entre une vitesse de l'actionneur du dispositif de synchronisation la plus rapide possible et un changement de rapport n'entraînant pas de détérioration de la boîte de vitesses.

En début de phase d'approche, la vitesse Vact cons, déterminée pour l'actionneur, peut être relativement élevée. Cette première consigne de vitesse est montrée à la figure 3 par une première droite Vact cons 1. Pour ordre d'idée, cette vitesse peut aller jusqu'à des valeurs de 300 mm/s lors de l'extraction du rapport.

Comme précédemment mentionné, ceci permet d'optimiser le temps de changement de rapport sans mettre en danger les éléments de la boîte de vitesses. En effet, au début de l'étape d'approche, aucun élément mécanique ne s'oppose au déplacement de l'actionneur et la vitesse de cet actionneur peut donc être relativement élevée.

L'étape d'approche se termine par une phase d'armement dont le commencement est référencé AS à la figure 3, pendant laquelle la bague de synchronisation du dispositif de synchronisation commence à venir en appui contre la surface de frottement correspondante associée au pignon à synchroniser.

Si le manchon 4 se déplace trop vite, durant la phase d'armement il n'y a pas suffisamment de temps pour évacuer suffisamment l'huile entre la bague de synchronisation 6a ou 6b et le pignon fou. Il est donc nécessaire d'associer à cette phase d'armement une consigne de vitesse inférieure à la précédente pour le déplacement de l'actionneur.

Pendant l'étape d'approche avant le début de la phase d'armement au point référencé AS, la consigne de vitesse de l'actionneur Vact cons est diminuée alors afin de suivre une consigne de vitesse Vact cons 2 illustrée par une seconde droite. Pour une consigne de vitesse Vact cons 1 précédente de l'ordre de 300 mm/s, la consigne de vitesse Vact cons 2 correspond sensiblement à une vitesse moins élevée qui est aux environs de 200 mm/s.

A la phase d'armement, mentionnée précédemment dont le début est référencé par le point AS et la fin par le point S pour lequel l'armement du dispositif de synchronisation est réalisée et pour lequel la synchronisation débute. Lors de cette étape, la résistance mécanique rencontrée par l'actionneur est encore plus importante que précédemment, en référence à la figure 1, du fait qu'un frottement établi entre la bague 6a ou 6b de synchronisation contre la surface de frottement 7a ou 7b associée s'oppose à la poussée de l'actionneur et nécessite d'effectuer sur l'actionneur un effort plus important lors de son déplacement.

La consigne de vitesse de l'actionneur Vact cons suit alors une troisième droite Vact cons 3 avec une consigne encore plus réduite aux environs de 100 mm/s.

Ainsi, lors de l'étape d'approche du dispositif de synchronisation se terminant par une phase d'armement et celle de synchronisation, les vitesses de l'actionneur du dispositif de synchronisation peuvent varier de quelques dizaines jusqu'à quelques centaines de mm/s.

La fin de l'étape d'approche, se finissant par une phase d'armement et le début de l'étape de synchronisation sont à déterminer précisément afin d'optimiser le pilotage de la boîte de vitesses par son unité de commande. Cette détermination est en pratique généralement déterminée en deux temps.

Dans un premier temps, la fin de l'étape d'approche ou le début de l'étape de synchronisation est déterminée dans l'absolu par chaîne de cote.

Dans un second temps, le début de l'étape de synchronisation est déterminé par auto-apprentissage précis du point de début de synchronisation. Ceci est effectué lors de l'utilisation du véhicule automobile, pour les passages de rapport montants, par la détection de la chute de régime de l'arbre primaire ou, pour les passages de rapport descendants, par la détection de l'augmentation du régime de l'arbre primaire. Ceci permet à l'unité de commande, mémorisant ces données, de déterminer expérimentalement le point de début de synchronisation pour la course de l'actionneur.

La figure 4 illustre un auto-apprentissage de début de synchronisation réalisé lors des changements de rapports montants.

Dans une boîte de vitesses manuelle pilotée, l'identification du début de l'étape de synchronisation est généralement effectuée par détection d'une variation significative du régime de rotation de l'arbre primaire Rap.

Ce critère peut cependant s'avérer insuffisamment fiable, cette variation du régime de rotation de l'arbre primaire Rap se déroulant pendant une durée relativement importante alors que la variation d'autres paramètres de fonctionnement de la boîte de vitesses intervient dans un temps beaucoup plus court.

Le début de l'étape de synchronisation peut donc aussi être identifié par détection, combinée ou non, d'une vitesse de déplacement de l'actionneur inférieure à une valeur prédéterminée, d'une valeur d'effort exercé sur l'actionneur supérieure à une valeur prédéterminée respective, ce qui traduit une résistance rencontrée par cet actionneur dans son déplacement. Ce ou ces paramètres peuvent être combinés ou non à une variation significative du régime de rotation de l'arbre primaire.

Par exemple, la vitesse de déplacement de l'actionneur de changement de rapport peut être mesurée en permanence par l'intermédiaire d'un capteur de position connecté à l'unité de commande de la boîte de vitesses, le début de la phase d'armement, à la fin de l'étape d'approche, pouvant être repéré par une diminution de la variation dans un temps donné de la vitesse de déplacement. Le début de l'étape de synchronisation peut aussi être repéré par une diminution encore plus prononcée ou une annulation de la variation dans un temps donné de cette vitesse de déplacement.

La valeur d'effort sur l'actionneur peut se faire par l'intermédiaire d'un capteur d'effort placé sur l'actionneur et connecté à l'unité de commande de la boîte de vitesses, la fin de l'étape d'approche étant identifiée par détection d'un accroissement de l'effort au-delà d'une valeur seuil prédéterminée.

A la figure 4, la courbe supérieure Rap montre la variation de régime de l'arbre primaire du véhicule automobile comprenant la boîte de vitesses dont l'auto-apprentissage de début de synchronisation est réalisé tandis que la courbe Vact est la courbe de vitesse réelle de l'actionneur lors des étapes d'approche et de synchronisation.

Lorsqu'une variation de régime de l'arbre primaire Rap est détectée, à la figure une chute de celui-ci dont le début est référencé P1, ceci permet à l'unité de commande de déterminer le point de début de synchronisation et donc d'imposer une consigne de vitesse moins élevée que précédemment.

Lors des premières utilisations du véhicule automobile avec des premiers changements de rapport de sa boîte de vitesses pilotée, la détermination respective du début de l'étape de synchronisation ou de la phase d'armement n'est cependant pas parfaitement toujours bien réalisée, étant donné que seul le premier des deux temps de détermination mentionnés précédemment a pu être utilisé et que seul un nombre limité ou nul de changements de rapport a été mémorisé pour son exploitation par l'unité de commande.

De ce fait, les vitesses d'accostage du dispositif de synchronisation sont dans certains cas, cela suivant les dispersions du système, trop rapides pour les premiers changements de rapport, étant donné que l'auto-apprentissage de la boîte de vitesses effectué par son unité de commande est incomplet et n'est pas encore suffisamment fiable.

Il est donc possible que l'armement et le début de synchronisation du synchroniseur se fassent à une vitesse supérieure à la consigne de vitesse qui est, en fonctionnement normal, préconisée afin d'éviter la détérioration de ce dernier. Ce cas de figure arrive quand le début de synchronisation se produit plus tôt dans la course de l'actionneur lors de l'extraction du rapport et que la consigne de vitesse n'a pas encore été réduite.

L'actionneur n'a ainsi pas le temps de ralentir à l'approche du dispositif de synchronisation et arrive avec une vitesse supérieure à la consigne de vitesse. Il y a alors le risque de détériorer ce dispositif et même la boîte de vitesses lors de ses premières utilisations.

Selon la présente invention, le procédé de protection d'une boîte de vitesses présentant au moins un ensemble de transmission de couple entre un arbre primaire et un arbre secondaire avec un dispositif de synchronisation, ledit ensemble étant activé par un actionneur, une unité de commande pilotant cet actionneur par détermination d'une consigne maximale de vitesse ou d'effort permettant un changement de rapport rapide sans endommagement dudit ensemble, cette unité de commande mesurant et comparant au moins un paramètre de fonctionnement de cette boîte avec une gamme préalablement établie de valeurs de ce paramètre correspondant à un fonctionnement normal de la boîte de vitesses, est **caractérisé en ce que,** quand le paramètre mesuré n'est pas dans ladite gamme, l'unité de commande remplace la consigne maximale de vitesse ou d'effort par une consigne corrigée de vitesse ou d'effort inférieure à celle-ci.

Ceci peut aussi se produire, non seulement en phase de rodage de la boîte de vitesse mais aussi dans d'autres cas de figure d'utilisation de la boîte de vitesses pour lesquels il y a un risque de détérioration de celle-ci, cela dans le cas d'une perturbation de son fonctionnement normal. La mise en oeuvre un procédé de protection, selon l'invention, peut être modulée selon le niveau de l'anormalité de fonctionnement détectée, par exemple par imposition d'une consigne de vitesse ou d'effort fonction de ce niveau.

Ainsi, par exemple, le film d'huile présent entre la surface de frottement du pignon à synchroniser et la bague peut présenter une température et/ou une viscosité sortant d'une gamme préétablie de valeurs de ces paramètres définissant un fonctionnement dit normal de la boîte de vitesses. Dans un cas de température basse et/ou de viscosité haute, l'essorage de ce film d'huile peut durer plus longtemps et nécessiter un début de synchronisation retardé ce qui peut être obtenu, par le procédé de protection de la présente invention, en imposant à l'actionneur une consigne de vitesse ou une consigne d'effort inférieure à celle imposée par l'unité de commande en fonctionnement dit normal de la boîte de vitesses. La durée pour le déplacement de l'actionneur est ainsi augmentée en conséquence.

L'application du procédé de protection conforme à la présente invention lors du rodage de la boîte de vitesses du véhicule automobile est cependant une application préférée.

Préférentiellement dans le cas d'un rodage de la boîte de vitesses, le procédé de protection consiste à permettre une vitesse évolutive lors de l'accostage sur le dispositif de synchronisation en fonction du nombre de changements de rapports afin de garantir un bon rodage global du dispositif de synchronisation.

Par fonctionnement normal de la boîte de vitesses, il est entendu que cette boîte de vitesse présente des paramètres de travail se trouvant à l'intérieur d'une gamme respective de variation de ces paramètres. Ces gammes peuvent avoir été déjà introduites dans l'unité de commande préalablement au fonctionnement de la boîte de vitesses ou mémorisées dans celle-ci lors de fonctionnements précédents.

L'unité de commande dispose ainsi de toutes les données suffisantes afin d'effectuer un pilotage efficient de la boîte de vitesses. L'unité de commande continue cependant à être programmée pour permettre le changement de rapport le plus rapide possible tout en le réalisant avec une totale sécurité de changement de rapport et de non détérioration des éléments impliqués dans ce changement.

Le procédé de protection selon la présente invention est illustré à la figure 5, dans le cas d'un nombre de changements de rapport insuffisant pour garantir le bon fonctionnement de la boîte de vitesses, ceci n'étant qu'une application préférentielle pour le procédé selon la présente invention.

Dans ce cas, le procédé mis en oeuvre présente un caractère évolutif et diffère selon le nombre de changements de rapport passés dans la boîte de vitesses.

Cette figure 5 montre une courbe de la vitesse de l'actionneur du dispositif de synchronisation en fonction du nombre de rapport passés.

La référence Vmax représente la vitesse cible de l'actionneur du dispositif de synchronisation à un instant donné du processus de changement de rapport afin de garantir une prestation optimale lors de ce changement de rapport tout en ne présentant pas de risque d'endommagement à cet instant donné d'un élément de la boîte de vitesses, par exemple du dispositif de synchronisation. Cette vitesse cible Vmax est déterminée pour des conditions normales de fonctionnement de la boîte de vitesses par son unité de commande.

Par exemple, sans que cela soit limitatif, il peut être déterminé une vitesse cible maximale un peu avant l'atteinte du point de synchronisation en début d'étape de synchronisation et une vitesse cible maximale un peu avant l'atteinte du point d'armement en fin d'étape d'approche.

Comme précédemment mentionné, cette vitesse cible Vmax est déterminée selon les caractéristiques de la boîte de vitesses et est à diminuer lorsque le point de synchronisation est atteint.

En fonctionnement normal de la boîte de vitesses, ce point de synchronisation a été déterminé lors une phase d'auto-apprentissage avec mémorisation d'un nombre n1 suffisant de changements de rapport par l'unité de commande, afin que celle-ci dispose de données fiables suffisantes pour la détermination de cette vitesse cible Vmax.

Cela est valable aussi pour la détermination du point d'armement et/ou du point de synchronisation à partir du ou desquels cette vitesse Vmax doit être réduite.

Ce nombre n1 peut avantageusement être de l'ordre d'une centaine de passages ou plus.

Aux tous premiers changements de rapport de la boîte de vitesses, l'unité de commande ne dispose pas de données suffisantes pour déterminer avec précision le point de synchronisation à partir duquel la vitesse de synchronisation doit être réduite pour la protection du dispositif de synchronisation. Le fonctionnement de la boîte de vitesse n'est donc pas considéré comme normal et le procédé de protection selon la présente invention est mis en oeuvre afin d'assurer la protection de la boîte de vitesses.

En effet, il existe un intervalle de temps dans lequel le point d'armement et/ou le point de synchronisation est susceptible d'être atteint, ce ou ces points ne pouvant pas être déterminés précisément. La consigne de vitesse doit être réduite dans cet intervalle de temps pour la protection de la boîte de vitesses.

L'unité de commande impose alors une consigne de vitesse d'accostage réduite Vinit à l'actionneur, définie avec une valeur plus faible que la vitesse cible Vmax pour une prestation optimale de la boîte de vitesses.

La protection de la boîte de vitesses pour les cas de dispersions défavorables est ainsi garantie par un mouvement d'approche plus lent du dispositif de synchronisation.

Toutefois, cette vitesse de consigne Vinit plus faible pénalise la prestation de temps de changement de rapports. La durée de limitation de vitesse selon le procédé de protection conforme à l'invention est ainsi limitée dans le temps d'utilisation. Quand la boîte de vitesses a subi un nombre n1 de changements de rapport estimé suffisant pour une détermination fiable du point de synchronisation et/ou du point d'armement en fin d'étape d'approche, son unité de commande rétablit la vitesse Vmax de fonctionnement normal de la boîte de vitesses comme vitesse cible.

De ce fait, une fois que l'auto-apprentissage du début de synchronisation est effectué, soit après un nombre n1 de changements de rapport, par exemple une centaine, la vitesse de l'actionneur est augmentée pour atteindre la valeur Vmax afin d'obtenir une prestation optimale, cette valeur Vmax étant la vitesse en fonctionnement normal de la boîte de vitesses.

Il est aussi possible de prévoir une vitesse de consigne intermédiaire Vinter à partir d'un certain nombre n2 de changements de rapport, par exemple quelques dizaines si n1 correspond à quelques centaines, cette vitesse Vinter étant comprise entre Vinit et Vmax et augmentant régulièrement avec le nombre de changements de rapport effectués jusqu'à atteindre Vmax pour le nombre n1 de changements de rapport.

En effet, la fiabilité des mesures d'auto-apprentissage augmente avec le nombre de changements de rapport effectués par la boîte de vitesses et mis en mémoire dans le calculateur de son unité de commande, ce qui fait que la vitesse de l'actionneur peut être augmentée.

Ainsi, une contrainte définissant une rampe d'augmentation de vitesses d'approche du dispositif de synchronisation est avantageusement intégrée dans l'unité de commande de la boîte de vitesses. Cela peut se faire sans que le conducteur ne s'en rende compte.

Il est également envisageable d'appliquer ce type de procédé de protection avec pilotage de l'effort exercé sur l'actionneur. En effet, l'évolution de la rampe de montée en effort lors de l'étape de synchronisation peut être, elle aussi, calibrée en fonction du nombre de changements de rapport. Dans ce cas, une consigne d'effort initiale déterminée remplace temporairement la consigne d'effort maximale.

Ce procédé de protection par limitation de la vitesse d'accostage ou de l'effort exercé sur l'actionneur, cette limitation étant évolutive dans le temps, permet de garantir la préservation d'une boîte de vitesses pilotée tout en conservant une prestation optimale pour l'utilisateur du véhicule avec une telle boîte étant donné que cette vitesse ou cet effort est augmenté automatiquement, une fois les conditions de fonctionnement normales de la boîte de vitesses atteintes, par exemple une fois le rodage effectué de la boîte.

Avantageusement, l'augmentation de la vitesse ou de l'effort peut être faite progressivement pendant une période intermédiaire quand la boîte de vitesses n'est pas encore en fonctionnement normal mais en fonctionnement anormal atténué tendant vers une normalisation.

Cette invention est valable pour tous les types de boîte robotisée comportant un actionneur de changement de rapport.

L'invention n'est nullement limitée au mode de réalisation décrit et illustré qui n'a été donné qu'à titre d'exemple.

## Revendications

1. Procédé de protection d'une boîte de vitesses, cette boîte de vitesses présentant au moins un ensemble de transmission de couple entre un arbre primaire et un arbre secondaire avec un dispositif de synchronisation (2), ledit ensemble étant activé par un actionneur, une unité de commande pilotant cet actionneur par détermination d'une consigne maximale (Vmax) de vitesse ou d'effort permettant un changement de rapport rapide sans endommagement dudit ensemble, cette unité de commande mesurant et comparant au moins un paramètre de fonctionnement de cette boîte avec une gamme préalablement établie de valeurs de ce paramètre correspondant à un fonctionnement normal de la boîte de vitesses, **caractérisé en ce que,** quand le paramètre mesuré n'est pas dans ladite gamme, l'unité de commande remplace la consigne maximale (Vmax) de vitesse ou d'effort par une consigne corrigée (Vinit) de vitesse ou d'effort inférieure à celle-ci.

2. Procédé selon la revendication 1, **caractérisé en ce que** la consigne corrigée (Vinit) de vitesse ou d'effort est préalablement établie afin de ne pas provoquer de dégradation de l'ensemble de transmission, notamment du dispositif de synchronisation (2), lors de la période de rodage de la boîte de vitesses.

3. Procédé selon la revendication 2, **caractérisé en ce que** le paramètre pris en compte par l'unité de commande est le nombre de changements de rapport déjà effectués lors du fonctionnement de la boîte de vitesses, la consigne maximale (Vmax) de vitesse ou d'effort étant remplacée par la consigne corrigée (Vinit) de vitesse ou d'effort tant que ce nombre de changements n'a pas atteint un premier nombre (n1) préalablement établi dans l'unité de commande.

4. Procédé selon la revendication 3, **caractérisé en ce qu'**un second nombre (n2) de changements de rapport, inférieur au premier (n1), est préalablement établi dans l'unité de commande, une consigne intermédiaire (Vinter) de vitesse ou d'effort étant appliquée à l'actionneur quand ce second nombre (n2) est atteint, cette consigne intermédiaire (Vinter) étant supérieure à la consigne corrigée (Vinit) de vitesse ou d'effort, ladite consigne intermédiaire (Vinter) croissant selon le nombre de changements de rapport effectués pour être égale à la consigne maximale (Vmax) de vitesse ou d'effort quand le premier nombre (n1) de changements de rapport est atteint.

5. Procédé selon l'une quelconque des revendications 3 ou 4, **caractérisé en ce que** le premier nombre (n1) est de l'ordre d'une ou de plusieurs centaines de changements de rapport et, le cas échéant, le second nombre (n2) est de l'ordre d'une ou de plusieurs dizaines de changements de rapport.

6. Procédé selon l'une quelconque des revendications précédentes, **caractérisé en ce que** l'activation de l'ensemble de transmission comprend une étape d'approche du dispositif de synchronisation (2) puis une phase d'armement dudit dispositif, une étape de synchronisation et une étape de changement de rapport, la consigne maximale (Vmax) et la consigne corrigée (Vinit) de vitesse ou d'effort s'appliquant au moins en fin d'étape d'approche commençant avec l'atteinte d'un point d'armement (AS) et/ou lors de l'étape de synchronisation commençant avec l'atteinte d'un point de synchronisation (S), ces points (AS et S) étant déterminés par l'unité de commande, pour un changement de rapport donné, selon un ou des paramètres de la boîte de vitesses.

7. Procédé selon la revendication précédente, **caractérisé en ce que** la consigne corrigée (Vinit) de vitesse ou d'effort est déterminée en tenant compte, lors d'un changement de rapport donné, d'un intervalle de temps dans lequel le point d'armement (AS) et/ou le point de synchronisation est (S) susceptible d'être atteint, cette consigne corrigée (Vinit) correspondant, dans l'intervalle de temps respectif à chacun de ces points (AS et S), à une valeur inférieure respectivement à la consigne maximale (Vmax) de vitesse ou d'effort au point d'armement (AS) et/ou au point de synchronisation (S).

8. Procédé selon l'une quelconque des revendications 6 ou 7, **caractérisé en ce qu'**au moins un desdits points (AS ou S) est déterminé par l'unité de commande en fonction de la variation de régime de l'arbre primaire (Rap) et/ou du déplacement accompli par l'actionneur et/ou de l'effort exercé sur l'actionneur lors de son déplacement.

9. Boîte de vitesses pilotée présentant une unité de commande, **caractérisée en ce que** son unité de commande intègre un procédé de protection selon l'une quelconque des revendications précédentes.

10. Véhicule automobile, **caractérisé en ce qu'**il comprend une boîte de vitesses pilotée selon la revendication précédente.
